(19) Europäisches Patentamt
European Patent Office
Office européen des brevets

(11) EP 2 736 164 B1

## (12) EUROPEAN PATENT SPECIFICATION

(45) Date of publication and mention
of the grant of the patent:
**19.08.2020 Bulletin 2020/34**

(51) Int Cl.:
***H02P 9/00*** *(2006.01)*   ***H02P 21/00*** *(2016.01)*

(21) Application number: **13386032.0**

(22) Date of filing: **27.11.2013**

(54) **Method for efficiency optimization of a wind generator by controlling the electrical generator and system therefor**

Verfahren zur Effizienzoptimierung eines Windgenerators durch Steuerung des Stromgenerators und System dafür

Procédé d'optimisation d'efficacité d'un générateur d'éolienne par régulation du générateur électrique et système associé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2012 GR 20120100602**

(43) Date of publication of application:
**28.05.2014 Bulletin 2014/22**

(73) Proprietors:
• **Aristotle University of Thessaloniki-Research Committee**
**54636 Thessaloniki (GR)**
• **Special Account Management Committee of International Hellenic University**
**54249 Thermi Thessalonikis (GR)**
• **Mademlis, Christos**
**54124 Thessaloniki (GR)**
• **Kioskeridis, Iordanis**
**56123 Thessaloniki (GR)**

(72) Inventors:
• **Mademlis, Christos**
**54124 Thessaloniki (GR)**

• **Kioskeridis, Iordanis**
**56123 Thessaloniki (GR)**

(74) Representative: **Petsis, Christos**
**4-6, Kyparissias**
**542 49 Thessaloniki (GR)**

(56) References cited:
• **MESEMANOLIS A ET AL: "A fuzzy-logic based control strategy for maximum efficiency of a Wind Energy Conversion System", POWER ELECTRONICS, ELECTRICAL DRIVES, AUTOMATION AND MOTION (SPEEDAM), 2012 INTERNATIONAL SYMPOSIUM ON, IEEE, 20 June 2012 (2012-06-20), pages 7-12, XP032221908, DOI: 10.1109/SPEEDAM.2012.6264586 ISBN: 978-1-4673-1299-8**
• **A. G. ABO-KHALIL; H. G. KIM; D. C. LEE; J. K. SEOK: "Maximum output power control of wind generation system considering loss minimization machines", PROC. IEEE INT. CONF. IECON, 2004, pages 1676-1681,**

EP 2 736 164 B1

**Description**

This invention relates to wind generators that use induction generators (squirrel cage asynchronous generators). This invention discloses a method for efficiency optimization of a wind energy conversion system by controlling the electric generator. This is implemented by means of a control scheme based on the control of the generator rotor speed and achieves simultaneously maximization of the efficiencies of wind turbine and electrical generator and therefore efficiency maximization of the total wind energy conversion system. Main advantages of the control scheme are the simple implementation, easy installation and satisfactory quick response so as it can follow the fast changes of wind speed.

The wind generator converts the kinetic energy of the wind into electrical energy that is provided either to an isolated electric consumer (stand-alone wind generator) or to the grid (grid connected wind generator). The presented invention can be applied in both cases of wind generators.

The wind generators that are mainly used in wind energy conversion systems are squirrel cage induction generators, slip ring induction generators and permanent magnet synchronous generators. The presented invention is applicable to wind generators with squirrel cage induction generators and especially relates to low and medium power wind generators.

The wind turbine provides electric energy when the wind speed is greater than a threshold, known as cut-in wind speed. If the wind speed is less than this threshold, the produced energy is not sufficient even to cover the electric and mechanical losses in the wind energy conversion system. Thus, in order to be produced maximum electric energy, the power loss should be minimized at each part of the wind system. This can be achieved by the appropriate control of the generator electric variables. Also, the proper control of the wind turbine rotor speed in relation to the respective wind speed may result in maximization of the output power. The above two goals can provide maximum efficiency of the total wind system. However, it is important that the control of the system should be simple, accurate to its result and fast in order to detect the changes of the wind speed. Also, it should not be affected the manufacturing cost and can be easily applicable to any wind generation system.

A variety of techniques have been proposed in the past for the optimal control of the wind generator speed in order to harvest maximum power from the incident wind. In Us 4,525,633 of 25 June 1985, the optimal rotational speed of the turbine is determined from the wind speed. This technique requires the measurement of the wind speed that is difficult to be accurately obtained since the anemometer is usually positioned in the rear part of the nacelle that results in inaccurate measurement.

In US 4,695,736 of 22 September 1978, the optimal speed of the wind turbine is determined through a look-up table; however, numerous experimental measurements are required for determining the necessary look-up table of reference speed vs. sensed power. In US 5,155,375 of 13 October 1992, the wind speed is estimated in time steps through an observer and then the optimal rotational speed of the wind turbine is determined; however, the proposed technique can approximately follow the varying wind speeds.

In US 7,304,400 B2 of 4 December 2007, a sensorless control technique for wind generation systems is proposed, where the shaft speed is estimated by the electric variables of the generator and in US 7,095,131 B2 of 22 August 2006, a control technique is presented, that is applicable to wind systems with slip ring induction generators, at which the turbine speed is controlled through the q-axis component of the rotor current.

Several research efforts have been also carried out so far to address the problem of improving the efficiency of the wind energy conversion system. Specifically, several methods have been proposed for maximizing the efficiency of wind turbines that either employ fuzzy-logic control techniques (R.M. Hilloowala and A.M. Sharaf, 'A rule-based fuzzy logic controller for a PWM inverter in a stand-alone wind energy conversion scheme', IEEE Trans. Ind. Appl., vol. 32, no. 1, pp. 57-65, Jan./Feb. 1996) and are based on the search control technique (R. Datta and V. T. Ranganathan, 'A method of tracking the peak power points for a variable speed wind energy conversion system', IEEE Trans. Energy Convers., vol. 18, no. 1, pp. 163-168, March 2003). However, a common feature of the above methods is that they have slow response and consequently they cannot follow the fast changes of the wind speed. The methods that are based on the neural network technique (such as the work of M. Pucci and M. Cirrincione, 'Neural MPPT control of generators with induction machines with-out speed sensors', IEEE Trans. Ind. Electron., vol. 58, no. 1, pp. 37-47, Jan. 2011) require a long time training for the system and consequently they cannot be directly applicable.

Several improved techniques to the above methods have been presented in the technical literature (Munteanu, S. Bacha, A. I. Bratcu, J. Guiraud, and D. Roye, 'Energy-reliability optimization of wind energy conversion systems by sliding mode control', IEEE Trans. Energy Convers., vol. 23, no. 3, pp. 975-984, Sept. 2008 and V. Galdi, A. Piccolo, and P. Siano, 'Designing an adaptive fuzzy controller for maximum wind energy extraction', IEEE Trans. Energy Convers., vol. 23, no. 2, pp. 559-569, June 2008); however, they are complicated and also the knowledge of the power curves of the wind turbine is required for their implementation.

In relation to the above, several techniques have been proposed for the improvement of the electrical generator efficiency through electric variables control. In US 5,075,612 of 24 December 1991, a control method for the magnetic field in a dc machine is presented in order to accomplish loss minimization. In US 7,312,592 of 25 December 2007, a control method for efficiency maximization of electric motors through specific current profiles is presented and in US 6,711,556 of 23 March 2004, by using the fuzzy-logic control method.

In US 7,854,283 B3 of 21 December 2010, a method that optimizes the efficiency of a power system is presented that can be applied to wind systems and takes into account various operating variables, i.e. wind conditions, ambient temperature, load level, etc. In the control technique that is presented in US 8,098,054 B2 of 17 January 2012, it is attempted to optimize the efficiency of a power system from the load side. Finally, in US 7,798,631 of 25 August 1998, a fuzzy-logic control method is proposed for improving the efficiency of the electric generator of a wind system.

In addition to the above and with emphasis on electric generators efficiency improvement of wind systems, the research efforts are focused on the control of the *d*-axis component of the electric generator stator current (field current). In the work of A. G. Abo-Khalil, H. G. Kim, D. C. Lee, and J. K. Seok, 'Maximum output power control of wind generation system considering loss minimization machines', in Proc. IEEE Int. Conf. IECON 2004, pp. 1676-1681, a condition for the optimal field current for induction generator is proposed. However, this condition is not accurate because it disregards the variation of the iron loss with respect to stator current frequency. In research work of A. G. Abo-Khalil, 'Model-based optimal efficiency control of induction generator for wind power systems', in Proc. Conf. Rec. ICIT-2011, pp. 191-197, a similar condition for the field current is proposed; however, it depends on the wind speed for which is well known that there are several difficulties for obtaining an accurate measurement. The research work of A. Mesemanolis, C. Mademlis, and I. Kioskeridis, 'A fuzzy-logic based control strategy for maximum efficiency of a wind energy conversion system', in Proc. IEEE Intern, Symposium on Power Electronics SPEEDAM 2012, pp. 7-12, also deals with wind energy conversion system efficiency maximization; however, since it is based on the fuzzy-logic control technique, it is very slow and cannot follow the fast changes of the wind speed. Also, a control strategy based on search control technique for both maximum power harvesting from the wind turbine and minimum power loss of the induction generator has been proposed in the paper of A. Mesemanolis, C. Mademlis, and I, Kioskeridis, 'Maximum electrical energy production of a variable speed wind energy conversion system', in Proc. IEEE Int. Symposium ISIE 2012, pp. 1029-1034; however, the response of the wind energy system is very slow and cannot follow the fast changes of the wind speed.

Research works concerning the efficiency optimization of wind turbines with permanent magnet synchronous generator are presented in the following papers: M. Chinchilla, S. Arnaltes, and J. C. Burgos, 'Control of permanent-magnet generators applied to variable-speed wind-energy systems connected to the grid', IEEE Trans. Energy Convers., vol. 21, no. 1, pp. 130-135, March 2006, W. Qiao, L. Qu, and R. G. Harley, 'Control of IPM synchronous generator for maximum wind power generation considering magnetic saturation', IEEE Trans. Ind. Appl., vol. 45, no. 3, pp. 1095-1105, May/June 2009, A. Mesemanolis, C. Mademlis, and I. Kioskeridis, 'Maximum efficiency of a wind energy conversion system with a PM synchronous generator', in Proc. MedPower 2010 Int. Conf., pp. 1-9 and A. Mesemanolis and C. Mademlis, 'A Neural Network Based MPPT Controller for Variable Speed Wind Energy Conversion Systems', Speedam Conf. June 2012.

The presented invention is defined in claims 1 and 5.

Due to the above, the cut-in wind speed is reduced and therefore optimal utilization of the wind system is accomplished, since more electric energy can be produced form the existing wind energy potential. The main feature of the control scheme is that only the measurement of the generator rotation speed is needed which is the input to the control scheme, while the measurement of the wind speed is not required. The advantages of the control scheme is the fast response because the optimal values of the field and torque currents are determined through appropriate mathematical equations that serve as control conditions in the closed-loop system. Thus, the control scheme has the capability to track the quick changes of the wind speed. It has also simple implementation and easy installation because it is not based on look-up tables that may require time consuming laboratory experiments. Moreover, it does not only burden the manufacturing cost, but needs less hardware than a standard system setup because it does not require anemometer for wind speed measurement. Therefore, the presented control scheme is a comprehensive, simple and cost-effective solution to the problem of efficiency optimization in a wind energy conversion system with squirrel cage induction generator.

In this respect there is proposed according to a particular embodiment of the invention, a control scheme for the rectifier converter of a wind generator with squirrel cage induction generator that implements the efficiency optimization control method above, comprising two controllers that operate simultaneously, have common input the generator speed and they determine the optimal values of the reference field and torque stator currents of the electric generator.

According to a further embodiment of the method of the invention, the reference field component of the stator current $I_{ds}^{*}$ determines the optimal magnetic flux so as loss minimization of the squirrel cage induction generator is accomplished.

According to a still further embodiment of the method of the invention, the reference torque component of the stator current $I_{qs}^{*}$ determines the optimal rotational speed of the squirrel cage induction generator so as maximum power harvesting of the wind turbine is accomplished.

According to a yet further embodiment of the method of the invention, the parameters $G_d$, $T_a$ and $T_b$ are determined by the eqns. (10) below and depend on the stator and rotor resistances ($R_s$ and $R_r$ respectively), the magnetizing and rotor inductances ($L_m$ and $L_r$, respectively), the iron loss coefficient $C_{Fe}$ and the stray loss coefficient $c_{str}$ of the squirrel cage induction generator.

According to an even further embodiment of the method of the invention, the parameters $G_{q1}$ and $G_{q2}$ are determined experimentally through curve fitting of the eqn. (20) below and also the parameter $G_q$ of said eqn. (20) is determined by the eqn. (17) below and depends on the pole pairs $p$ and the magnetizing and rotor inductances ($L_m$ and $L_r$, respectively) of the squirrel cage induction generator, the air density $p$, the gear ratio $n$, the mechanical loss coefficient $c_m$ of the wind system, the radius of the blades $R$, the optimal value of tip speed ratio $\lambda_{opt}$ and the optimal value of the aerodynamic coefficient $C_{Popt}$ of the wind turbine.

According to another embodiment of the invention, the rectifier converter of the wind generator with squirrel cage induction generator is implemented by a fully controlled IGBT converter that utilizes field oriented control through space-vector modulation.

According to another particular embodiment of the invention, the reference field component of the stator current $I_{ds}^*$ is regulated through a controller that implements the condition of eqn. (21) below and the input to the controller is the rotational speed $\omega_r$ of the squirrel cage induction generator.

According to an additional embodiment of the invention, the reference torque component of the stator current $I_{qs}^*$ is regulated through a controller that implements the condition of eqn. (22) below and the input to the controller is the rotational speed $\omega_r$ of the squirrel cage induction generator.

To summarise, it is thus proposed according to the invention a method for efficiency optimization of a wind generator by controlling the squirrel cage induction generator is proposed. The method achieves simultaneously maximum efficiency of the wind turbine (wind mill) and maximum efficiency of the electric generator through the minimization of its electric loss. Additionally, expansion of the exploitable wind speed region is accomplished through the reduction of the cut-in speed at which the wind system starts to provide power to the grid. The method is implemented by appropriately controlling the power rectifier and without requiring the measurement of the wind speed. Input to the control scheme is the rotational speed of the electric generator. The control scheme comprises two controllers that, for any wind speed, provide the optimal reference field and torque stator current components of the squirrel cage induction generator. The two current components are determined through optimal conditions. The main advantages of the presented control scheme are the quick response so as it can follow the fast changes of the wind speed and also the simple implementation and the easy installation.

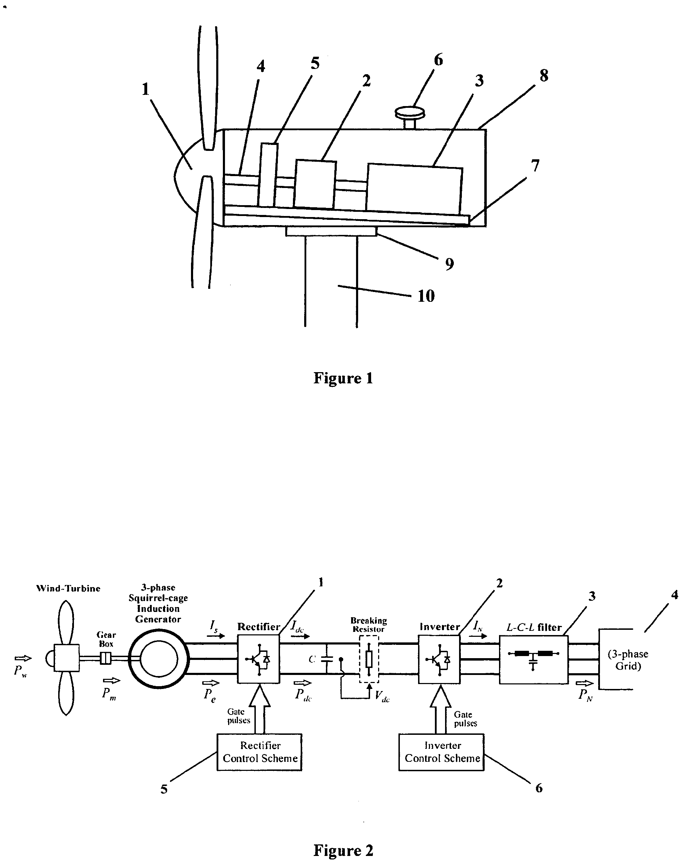

Figure 1 shows the various parts of a typical wind generator. It consists of a wind turbine 1, a gear-box 2, an electric generator 3, a shaft 4, a brake 5, an anemometer 6 and a support frame 7. In the wind turbine 1, it is included the blades, the hub and the nose cone. The shaft 4 connects the wind turbine with the gear box; whereas in case of direct driven wind turbines, the shaft connects the wind turbine with the electric generator. In medium and high power wind generation systems, a blades pitch control system is usually installed. All the above components are installed in the nacelle 8. Finally, 9 is the yaw control system that adjusts the nacelle to the wind direction and 10 is the tower.

Figure 2 shows a control scheme of the wind generation system, through which, the invention is implemented. It consists of two back-to-back converters. The power converter at the generator side 1 operates as a rectifier and controls the induction generator. The power converter 2 operates as an inverter and converts the dc power provided by the rectifier to ac power, which after passing through an L-C-L filter 3 it is injected to the grid 4. The rectifier control scheme 5 and the inverter control scheme 6 operate at this invention by the vector control technique. Thus, the rectifier control scheme regulates the two components of the generator stator current i.e. field current $I_{ds}$ and torque current $I_{qs}$, in order to obtain maximum power from the wind generator. The inverter control scheme regulates the $I_{dN}$ and $I_{qN}$ components of the output current to the grid, in order to maintain constant the dc-link voltage and to control the reactive power to the grid, respectively.

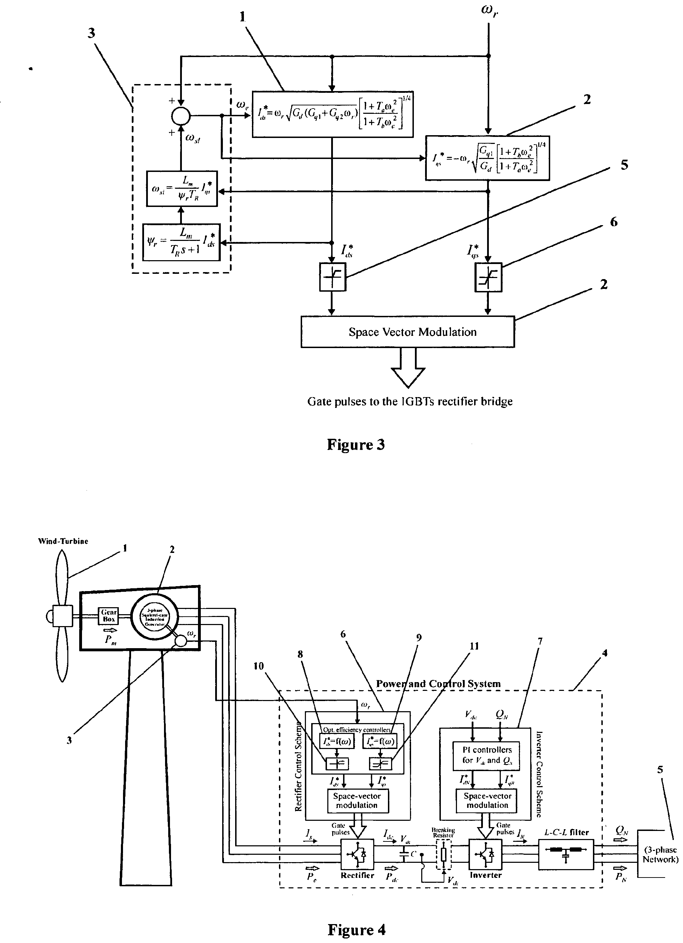

Figure 3 shows the block diagram of the rectifier control scheme, where $\omega_{sl}$ is the slip angular velocity and $T_R$ is the rotor time constant ($T_R = L_r / R_r$). All the other variables are defined at the mathematical determination of the optimal conditions. It is composed of the loss minimization controller 1 which determines the reference optimal field current $I_{ds}^*$ and the maximum power point tracking controller, MPPT, (2) which determines the reference optimal torque current $I_{qs}^*$. The current $I_{qs}^*$ is negative because the induction machine operates as a generator. Input to the control scheme and common input to both controllers is the rotational speed of the generator $\omega_r$ which is obtained by a speed sensor located at the rotor shaft. The speed $\omega_e$ is the electric synchronous speed of the generator which is needed in the condition of the loss minimization controller 1 and is determined through the closed-loop control system 3. Specifically, the rotor flux-linkage $\psi_r$ is determined through the $I_{ds}^*$ and then, the slip angular velocity $\omega_{sl}$ is determined by using the $\psi_r$ and the reference q-axis stator current $I_{qs}^*$. The optimal values of the electric generator stator current components $I_{ds}^*$ and $I_{qs}^*$ are determined through the respective optimal conditions. The above control procedure is followed for all the cases that the reference currents $I_{ds}^*$ and $I_{qs}^*$ are lower than their respective rated values. The currents $I_{ds}^*$ and $I_{qs}^*$, as output signals of the two controllers, cannot exceed their maximum values, because they are limited by the Limiters 5 and 6, respectively. This could be occurred either during transients or at high wind speeds. At the presented control scheme, the electric variables of the squirrel cage induction generator are controlled by using only the mechanical speed of the rotor shaft. Consequently, the efficiency of the wind generator can be optimized by measuring only the rotor speed. Moreover, the optimal reference values of the two stator current components are determined quickly and with satisfactory accuracy, since they are online calculated through the respective two mathematical conditions. This results in quick response of the system and thus it can follow the fast changes of the wind speed.

The analytical solution for the optimal field and torque current conditions is following:

a) The loss minimization of the squirrel cage induction generator can be achieved through the appropriate control of the magnetic field by controlling the field current component of the stator current. If $I_{ds}$ and $I_{qs}$ are the two components of the stator current and $I_{dr}$ and $I_{qr}$ are the two components of the rotor current, the electric loss of the squirrel cage induction generator is given by

$$P_L = 3(I_{ds}^2 + I_{qs}^2)R_s + 3(I_{dr}^2 + I_{qr}^2)R_r + c_{Fe}L_m^2\omega_e^2(I_{ds}^2 + I_{qs}^2) + c_{str}(I_{dr}^2 + I_{qr}^2)\omega_e^2 \qquad (1)$$

where $R_s$ is the stator resistance, $R_r$ is the rotor resistance, $\omega_e$ is the electric angular velocity, $L_m$ is the magnetizing inductance, $c_{Fe}$ is the iron loss coefficient and $c_{str}$ is the stray loss coefficient.
At steady state, the rotor flux linkage $\psi_r$ is aligned to the d-axis, ($\psi_{dr} = \psi_r$ and $\psi_{qr} = 0$) and therefore

$$I_{qr} = -\frac{L_m}{L_r}I_{qs} \quad \text{and} \quad I_{dr} = 0 \qquad (2)$$

where $\psi_{dr}$ is the $d$-axis rotor flux, $\psi_{qr}$ is the $q$-axis rotor flux and $L_r$ is the rotor inductance ($L_r = L_m + L_{lr}$, where $L_{lr}$ is the rotor leakage inductance). Using eq. (2), the eq. (1) is written as

$$P_L = I_{ds}^2(3R_s + c_{Fe}L_m^2\omega_e^2) + I_{qs}^2\left[3\left(R_s + R_r\frac{L_m^2}{L_r^2}\right) + L_m^2\omega_e^2\left(c_{Fe} + \frac{c_{str}}{L_r^2}\right)\right] \qquad (3)$$

The electric loss is minimized when

$$\left.\frac{\partial P_L}{\partial I_{ds}}\right|_{\omega_e} = 0 \qquad (4)$$

and by using eq. (3) it is concluded

$$I_{ds}(3R_s + c_{Fe}L_m^2\omega_e^2) + I_{qs}\frac{\partial I_{qs}}{\partial I_{ds}}\left[3\left(R_s + R_r\frac{L_m^2}{L_r^2}\right) + L_m^2\omega_e^2\left(c_{Fe} + \frac{c_{str}}{L_r^2}\right)\right] = 0 \qquad (5)$$

At steady state, the generator electromagnetic torque is constant and therefore

$$\left.\frac{\partial T_e}{\partial I_{ds}}\right|_{\omega_e} = 0 \qquad (6)$$

The equation of the electromagnetic torque can be written in terms of $d$- and $q$-axis stator current components as (where $p$ is the pole pairs of the induction generator)

$$T_e = \frac{3}{2}p\frac{L_m^2}{L_r}I_{ds}I_{qs} \qquad (7)$$

and by using eq. (7) in (6) yields

$$\frac{\partial I_{qs}}{\partial I_{ds}} = -\frac{I_{qs}}{I_{ds}} \qquad (8)$$

Substituting eq. (8) in (5), it is concluded that the reference field current for attaining loss minimization in squirrel cage induction generator is given by

$$I_{ds_{opt}}^{*} = \left|I_{qs}\right|G_d\sqrt{\frac{1+T_a\omega_e^2}{1+T_b\omega_e^2}} \qquad (9)$$

where

$$G_d = \sqrt{1+\frac{R_rL_m^2}{R_sL_r^2}} \quad , \quad T_a = L_m^2\frac{c_{Fe}(L_r-L_m)^2+c_{str}}{3\left(R_sL_r^2+R_rL_m^2\right)} \quad \text{and} \quad T_b = L_m^2\frac{c_{Fe}}{3R_s} \qquad (10)$$

b) Maximum power harvesting of the wind turbine is achieved with proper adjustment of the rotational speed through the stator torque current component of the electric generator. The power captured by the wind turbine is given by

$$P_w = \frac{1}{2}\rho A C_P(\lambda,\beta)u^3 \qquad (11)$$

where $\rho$ is the air density, $A$ is the swept area of the turbine, $C_P(\lambda,\beta)$ is the wind turbine coefficient, $u$ is the wind speed (m/s), $\beta$ is the blades pitch angle and $\lambda$ is the tip speed ratio which is defined as the ratio of the linear velocity of the blade tip to the wind speed as follows

$$\lambda = \frac{\omega_r R}{u} \qquad (12)$$

where $\omega_r$ is the wind turbine rotational speed (in rad/s) and $R$ is the radius of the blades. For each wind speed $u$, the optimum rotor speed that provides maximum output power of the wind turbine (MPPT operation) is given by

$$\omega_{r_{opt}} = \frac{\lambda_{opt}u}{R} \qquad (13)$$

The torque of the wind turbine is equal to the mechanical loss torque of the system plus the electromagnetic torque of the electric generator, thus

$$T_w = T_{ml} + T_e \qquad (14)$$

Since the mechanical loss torque is proportional to the square of the rotational speed

$$T_{ml} = c_m \omega_r^2 \qquad (15)$$

where $c_m$ is the mechanical loss coefficient of the wind system and considering eq. (7), it is concluded that maximum power of wind turbine is attained when

$$I_{ds} I_{qs} = G_q \omega_r^2 \qquad (16)$$

where $G_q$ is a coefficient that depends on constructional parameters of the turbine and magnetic parameters of the generator

$$G_q = L_r \frac{\rho \pi R^5 C_{p_{opt}} - 2 c_m \lambda_{opt}^3}{3 p L_m^2 n \lambda_{opt}^3} \qquad (17)$$

and $n$ is the gear ratio.

c) The two conditions that are given in eqs. (9) and (16) should hold simultaneously in order to be concurrently achieved loss minimization in the generator and maximum power harvesting from the wind turbine. Therefore, from eqs. (9) and (16), it is concluded that the optimal conditions for the reference field and torque stator current components of squirrel cage induction generator are given by the following equations

$$I_{ds_{opt}}^* = \omega_r \sqrt{G_d G_q} \left[ \frac{1 + T_a \omega_e^2}{1 + T_b \omega_e^2} \right]^{1/4} \qquad (18)$$

and

$$\left| I_{qs_{opt}}^* \right| = \omega_r \sqrt{\frac{G_q}{G_d}} \left[ \frac{1 + T_b \omega_e^2}{1 + T_a \omega_e^2} \right]^{1/4} \qquad (19)$$

Since the gain $G_q$ varies with electric generator saturation and specifically it increases as saturation increases, because of $L_m$ reduction, the $G_q$ should be an increasing function of the load and hence an increasing function of the wind turbine speed

$$G_q = G_{q1} + G_{q2} \omega_r \qquad (20)$$

The influence of saturation on the parameter $T_a$ is negligible because the magnetizing inductance $L_m$ is in the nominator and denominator of the fraction and therefore, its influence is neutralized. Also, by taking into account that the parameter $T_b$ reduces as saturation increases, the influence of saturation on $I_{qs}^*$ is very narrow (the saturation has opposite influence to $T_b$ against to $G_q$). From the above it is concluded that the optimal conditions of $I_{ds}^*$ and $I_{qs}^*$ currents of the squirrel cage induction generator are given by

$$I^*_{ds_{opt}} = \omega_r \sqrt{G_d(G_{q1} + G_{q2}\omega_r)} \left[ \frac{1 + T_a\omega_e^2}{1 + T_b\omega_e^2} \right]^{1/4} \qquad (21)$$

and

$$\left| I^*_{qs_{opt}} \right| = \omega_r \sqrt{\frac{G_{q1}}{G_d}} \left[ \frac{1 + T_b\omega_e^2}{1 + T_a\omega_e^2} \right]^{1/4} \qquad (22)$$

The influence of temperature variation on the optimal conditions of $I^*_{ds}$ and $I^*_{qs}$ currents is negligible because a resistance is in the nominator and denominator of the each fraction and therefore, the total influence of temperature is neutralized.

The presented control scheme provides maximum efficiency of the wind energy conversion system (i.e. maximum efficiency of the wind turbine and maximum efficiency of the electric generator) and consists of two controllers that are implemented by eqs. (21) and (22), respectively. Input to the control scheme is the rotor speed and outputs are the references of field and torque current components of the generator stator current. For the implementation of the above two controllers, the knowledge of the coefficients $G_d$, $G_{q1}$, $G_{q2}$, $T_a$ και $T_b$ in conditions (21) and (22) is required. The values of the above coefficients can be determined experimentally through an off-line experimental procedure and therefore the knowledge of the exact models of the generator and wind turbine is not required.

The advantages of the presented control scheme are summarized as follows:

a) the knowledge of the wind speed is not required and therefore less hardware is needed (anemometer is not mounted) compared to a conventional installation,

b) the knowledge of the model parameters of the wind turbine and electric generator is not required except those that are already needed for the vector control of the rectifier, in contrast to other conventional methods that need look-up tables of the above parameters, and therefore the proposed control scheme provides easy implementation and simple installation, and finally,

c) the control scheme has quick response because the optimal efficiency operating point of wind system is not searched and therefore it can follow the quick changes of the wind speed.

Figure 4 shows the implementation diagram of the invention in a 5 kW wind system. The wind energy is converted to kinetic energy at the shaft of the turbine 1 and through the electric generator 2 it is converted to electric power. The shaft speed is measured by an optical encoder 3 that is installed at the generator shaft. The shaft speed is needed for the implementation of the vector control in the rectifier control scheme and also for the implementation of the electric generator stator current control in order to achieve maximum efficiency in the wind system. The power that is produced by the generator passes through the power converter system 4 and then it is injected to the grid 5. The power converter system 4 is supervised by two control schemes, the rectifier control scheme 6 and the inverter control scheme 7.

According to the present invention, the signal of the shaft rotational speed of the squirrel cage induction generator is driven to the rectifier control scheme 6 that is implemented in a microcontroller. The rectifier control scheme consists of two controllers: the loss minimization controller of the electric generator 8 and the maximum power tracking controller of the wind turbine 9. Common input for both controllers is the signal of the rotational speed $\omega_r$ and outputs are the reference signals of the field and torque stator currents $I^*_{ds}$ and $I^*_{qs}$, respectively. The two controllers operate simultaneously and implement the two optimal conditions of eqs. (21) and (22). Thus, in any wind speed, the two controllers provide the optimal reference currents $I^*_{ds}$ and $I^*_{qs}$ that are determined by the two control conditions and thereby, maximum efficiency operation of the wind system can be reached in only a few cycles of the digital controller. The above control procedure continues for all cases that the reference currents $I^*_{ds}$ and $I^*_{qs}$ are less than their respective nominal values. The output signals $I^*_{ds}$ and $I^*_{qs}$ of the two controllers do not exceed their nominal values because they are constrained by the Limiters (10) and (11). This may occur during transients and in high wind speeds.

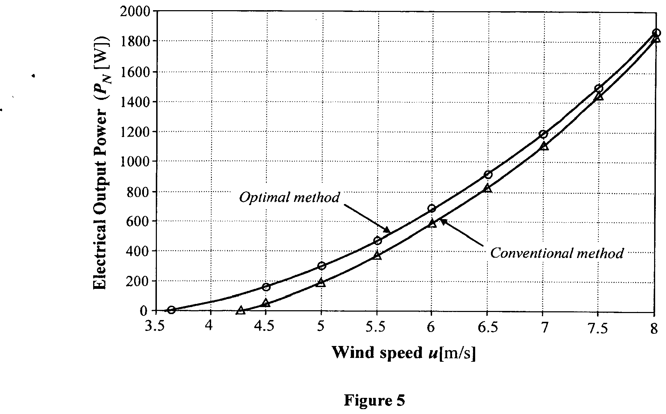

Figure 5 compares the variation of the electric output power to the grid versus wind speed of a 5 kW wind system with the presented control technique (optimal method) against the conventional operation of the system at which only maximum power point tracking control is applied, MPPT control (conventional method). In both cases, a gear box with speed ratio 4 is used. From this diagram it is concluded that, from the same wind energy potential, the electric power production is increased by the presented optimal control scheme for all wind speed cases and also, the system starts to produce electric power from lower wind speed values (reduction of the cut-in wind speed). Specifically, the wind system with the optimal control starts to provide power to the grid from wind speed of 3.6 m/s, whereas the conventional system starts to provide power to the grid from 4.26 m/s. The above is achieved because with the proposed optimal control, maximum power from the wind turbine is accomplished and also increased percentage of the wind turbine energy is converted to electrical energy to grid, since the electric loss in the generator is minimized.

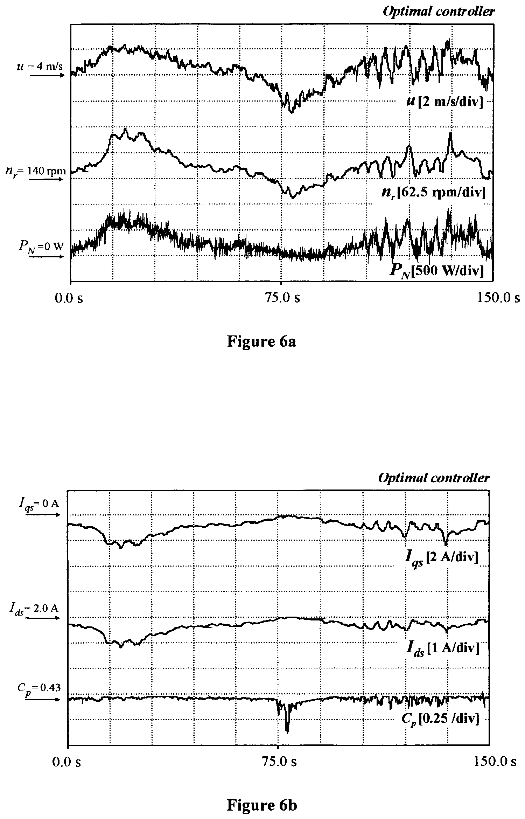

Figures 6a and 6b show the performance of the 5 kW wind energy conversion system with the optimal control, for a time period of 2.5 min. From these figures it is resulted that the wind system exhibits quick response and satisfactory dynamic performance at the changes of the wind speed. This can be concluded from the fact that, the aerodynamic power coefficient $C_P$ has almost constant value of 0.43 that corresponds to the maximum efficiency of the wind turbine, at all wind speed cases. Also, it is validated that the optimal control scheme provides electric power to the grid at lower wind speed than 4.26 m/s, at which the conventional system starts to provide power to the grid.

## Claims

1. A method for efficiency optimization of a wind generator by controlling the squirrel cage induction generator that can simultaneously achieve maximum power harvesting from the wind turbine and maximum efficiency of the electric generator by means of minimizing its electric loss, **characterized by** the following steps:

   a) the generator speed $\omega_r$ is measured by a sensor at the generator rotor shaft and it is the only input signal,

   b) the reference field current $I_{ds}^*$ of the electric generator is calculated so as the efficiency of the electric generator is maximized through the mathematical equation $I_{ds_{opt}}^* = \omega_r \sqrt{G_d G_q} \left[ \dfrac{1+T_a \omega_e^2}{1+T_b \omega_e^2} \right]^{1/4}$ that serves as optimal condition for the $I_{ds}$ current controller and uses the parameters $G_d$, $G_{q1}$, $G_{q2}$, $T_a$ and $T_b$, and also the synchronous angular velocity $\omega_e$ which is determined by the vector control closed-loop of the electric generator of d) and e) below,

   c) the reference torque current $I_{qs}^*$ of the electric generator is calculated so as the efficiency of the wind turbine is maximized through the mathematical equation $\left| I_{qs_{opt}}^* \right| = \omega_r \sqrt{\dfrac{G_q}{G_d}} \left[ \dfrac{1+T_b \omega_e^2}{1+T_a \omega_e^2} \right]^{1/4}$ that serves as optimal condition for the $I_{ds}$ current controller and uses the parameters $Gd$, $G_{q1}$, $T_a$ and $T_b$, and also the synchronous angular velocity $\omega_e$ which is determined by the vector control closed-loop of the electric generator of d) and e) below,

   d) the above parameters $G_d$ as defined in the equation $G_d = \sqrt{1 + \dfrac{R_r L_m^2}{R_s L_r^2}}$, $G_{q1}$, $G_{q2}$ as determined by the equation $G_q = G_{q1} + G_{q2}\omega_r$ and through the equation $G_q = L_r \dfrac{\rho \pi R^5 C_{P_{opt}} - 2c_m \lambda_{opt}^3}{3p L_m^2 n \lambda_{opt}^3}$, and $T_a$ and $T_b$ as defined in the equations $T_a = L_m^2 \dfrac{c_{Fe}(L_r - L_m)^2 + c_{str}}{3\left(R_s L_r^2 + R_r L_m^2\right)}$ and $T_b = L_m^2 \dfrac{c_{Fe}}{3R_s}$ depend on rotor resistance $R_r$, stator resistance $R_s$, magnetizing inductance $L_m$, the rotor inductance $L_r$ where $L_r = L_m + L_{lr}$ and $L_{lr}$ is the rotor flux-leakage, iron loss coefficient $C_{Fe}$, and stray loss coefficient $c_{str}$, air density $\rho$, radius of the blades R, gear ratio n, mechanical loss coefficient $c_m$, pole pairs of the three-phase induction generator $p$, the optimal wind turbine coefficient $C_{P_{opt}}$, and $\pi$ is equal to 3,14, whereby the parameters $G_{q1}$ and $G_{q2}$ are determined experimentally through curve fitting, and wherein $\lambda_{opt}$ is given by $\omega_{r_{opt}} = \dfrac{\lambda_{opt} u}{R}$ where $\omega_r$ is the wind turbine rotational speed (in rad/s) yielding the optimum rotor speed that provides maximum output power of the wind turbine (MPPT operation) for each wind speed $u$, where $u$ is the wind speed (m/s) and $\lambda$ is the tip speed ratio which is defined as the ratio of the linear velocity of the blade tip to the wind speed as follows

$$\lambda = \frac{\omega_r R}{u}, \qquad (1)$$

e) the synchronous angular velocity $\omega_e$ is needed as feedback signal for the previous steps b) and c) and is calculated by the vector control close-loop of the electrical generator by considering the magnetizing inductance $L_m$ and the rotor time constant $T_R = L_r / R_r$, where $R_r$ is the rotor ohmic resistance and $L_r$ is the rotor inductance $L_r = L_m + L_{lr}$ where $L_{lr}$ is the rotor flux-leakage, and finally,

f) the reference currents $I^{*}_{ds_{opt}}$ and $\left| I^{*}_{qs_{opt}} \right|$ calculated in the steps b) and c), are given as input signals to a space vector modulator in order to provide the gate pulses to the rectifier of the wind generator.

2. Method according to the claim 1, **characterised in that** the reference field component of the stator current $I^{*}_{ds_{opt}}$ determines the optimal magnetic flux so as loss minimization of the squirrel cage induction generator is accomplished.

3. Method according to one of the claims 1 or 2, **characterised in that** the reference torque component of the stator current $\left| I^{*}_{qs_{opt}} \right|$ determines the optimal rotational speed of the squirrel cage induction generator so as maximum power harvesting of the wind turbine is accomplished.

4. Method according to one of the claims 1 to 3, **characterised in that** the parameters $G_{q1}$ and $G_{q2}$ are determined experimentally through curve fitting of the equation $G_q = G_{q1} + G_{q2}\omega_r$ wherein the parameter $G_q$ is determined by the equation $G_q = L_r \dfrac{\rho\pi R^5 C_{p_{opt}} - 2c_m \lambda_{opt}^3}{3 p L_m^2 n \lambda_{opt}^3}$ and depends on the pole pairs $p$ and the magnetizing and rotor inductances $L_m$ and $L_r$, respectively of the squirrel cage induction generator, the air density $p$, the gear ratio $n$, the mechanical loss coefficient $c_m$ of the wind system, the radius of the blades $R$, the optimal value of tip speed ratio $\lambda_{opt}$ and the optimal value of the aerodynamic coefficient $C_{popt}$ of the wind turbine.

5. System with a control scheme for the rectifier converter of a wind generator with squirrel cage induction generator **characterised in that** it implements the efficiency optimization control method of the claim 1, and that it comprises two controllers (5,6) that operate simultaneously by having common input the generator speed $\omega_r$ and they determine the optimal values of the reference field and torque stator currents of the electric generator for determining the optimal $I^{*}_{ds_{opt}}$ and $\left| I^{*}_{qs_{-}} \right|$ components of the stator current as defined in claim 1 in b) and c), respectively.

6. System according to claim 5, **characterised in that** the rectifier converter of the wind generator with squirrel cage induction generator is implemented by a fully controlled IGBT converter that utilizes field oriented control through space-vector modulation.

7. System according to one of the claims 5 or 6, **characterised in that** the reference field component of the stator current $I^{*}_{ds}$ is regulated through a controller that implements the condition of the equation $I^{*}_{ds_{opt}} = \omega_r \sqrt{G_d (G_{q1} + G_{q2}\omega_r)} \left[ \dfrac{1 + T_a \omega_e^2}{1 + T_b \omega_e^2} \right]^{1/4}$ and the input to the controller is the rotational speed $\omega_r$ of the squirrel cage induction generator.

8. System according to one of the claims 5 to 7, **characterised in that** the reference torque component of the stator current $I_{qs}^*$ is regulated through a controller that implements the condition of the equation

$$\left| I_{qs_{opt}}^* \right| = \omega_r \sqrt{\frac{G_{q1}}{G_d}} \left[ \frac{1 + T_b \omega_e^2}{1 + T_a \omega_e^2} \right]^{1/4}$$ and the input to the controller is the rotational speed $\omega_r$ of the squirrel cage induction generator.

**Patentansprüche**

1. Verfahren zur Optimierung des Wirkungsgrades eines Windgenerators durch Steuerung des Asynchrongenerators mit Käfigläufer, der gleichzeitig eine maximale Leistungsausbeute aus der Windturbine und einen maximalen Wirkungsgrad des elektrischen Generators durch Minimierung seiner elektrischen Verluste erreichen kann, **gekennzeichnet durch** die folgenden Schritte: :

a) die Generatordrehzahl $\omega_r$ wird von einem Sensor an der Rotorwelle des Generators gemessen und ist das einzige Eingangssignal,
b) der Referenzfeldstrom $I^*_{ds}$ des elektrischen Generators wird so berechnet, dass der Wirkungsgrad des elektrischen Generators durch die mathematische Gleichung $I_{ds_{opt}}^* = \omega_r \sqrt{G_d G_q} \left[ \frac{1 + T_a \omega_e^2}{1 + T_b \omega_e^2} \right]^{1/4}$

maximiert wird, die als optimale Bedingung für den $I_{ds}$-Stromregler dient und die Parameter $G_d$, $G_{q1}$, $G_{q2}$, $T_a$ und $T_b$ sowie die synchrone Winkelgeschwindigkeit $\omega_e$ verwendet, die durch die Vektorregelung des elektrischen Generators von d) und e) unten bestimmt wird,
c) der Referenzdrehmomentstrom $I^*_{qs}$ des elektrischen Generators wird so berechnet, dass der Wirkungsgrad der Windturbine durch die mathematische Gleichung $\left| I_{qs_{opt}}^* \right| = \omega_r \sqrt{\frac{G_q}{G_d}} \left[ \frac{1 + T_b \omega_e^2}{1 + T_a \omega_e^2} \right]^{1/4}$

maximiert wird, die als optimale Bedingung für den $I_{ds}$-Stromregler dient und die Parameter $G_d$, $G_{q1}$, $T_a$ und $T_b$ sowie die synchrone Winkelgeschwindigkeit $\omega_e$ verwendet, die durch den Vektorregelkreis des elektrischen Generators von d) und e) unten bestimmt wird,

d) die obigen Parameter $G_d$, wie in der Gleichung $G_d = \sqrt{1 + \frac{R_r L_m^2}{R_s L_r^2}}$ definiert, $G_{q1}$, $G_{q2}$, wie durch die Gleichung $G_q = G_{q1} + G_{q2}\omega_r$ und durch die Gleichung $G_q = L_r \frac{\rho \pi R^5 C_{Popt} - 2 c_m \lambda_{opt}^3}{3 p L_m^2 n \lambda_{opt}^3}$ bestimmt, und $T_a$

und $T_b$, wie in den Gleichungen $T_a = L_m^2 \frac{c_{Fe}(L_r - L_m)^2 + c_{str}}{3 \left( R_s L_r^2 + R_r L_m^2 \right)}$ und $T_b = L_m^2 \frac{c_{Fe}}{3 R_s}$ definiert,

hängen vom Rotorwiderstand $R_r$, Statorwiderstand $R_s$, der Magnetisierungs-Induktivität $L_m$, der Rotorinduktivität $L_r$ ab, wobei $L_r = L_m + L_{fr}$ und $L_{fr}$ die Rotorflussleckage ist, vom Eisenverlustbeiwert $C_{Fe}$ und dem Streuverlustbeiwert $C_{str}$ der Luftdichte $\rho$, dem Radius der Blätter $R$, dem Übersetzungsverhältnis $n$, dem mechanischen Verlustbeiwert $C_m$, den Polpaaren des Dreiphasen-Asynchrongenerators $p$, dem optimalen Windturbinenkoeffizienten $C_{popt}$ ab, und dabei ist $\pi$ gleich 3,14, wobei die Parameter $G_{q1}$ und $G_{q2}$ experimentell durch Kurvenanpassung bestimmt werden, und wobei $\lambda_{opt}$ durch

$$\omega_{r_{opt}} = \frac{\lambda_{opt} u}{R}$$

gegeben ist, wobei $\omega_r$ die Winddrehzahl (in rad/s) ist, die die optimale Rotorgeschwindigkeit ergibt, die die maximale Ausgangsleistung der Windturbine (MPPT-Betrieb) für jede Windgeschwindigkeit $u$ liefert, wobei $u$ die Windgeschwindigkeit (m/s) ist und $\lambda$ das Spitzengeschwindigkeitsverhältnis ist, das als das Verhältnis der linearen Geschwindigkeit der Blattspitze zur Windgeschwindigkeit wie folgt definiert ist:

$$\lambda = \frac{\omega_r R}{u}, \qquad\qquad (\text{I})$$

e) die synchrone Winkelgeschwindigkeit $\omega_e$ wird als Rückkopplungssignal für die vorhergehenden Schritte b) und c) benötigt und wird durch den vektoriellen Regelkreis des elektrischen Generators unter Berücksichtigung der Magnetisierungsinduktivität $L_m$ und der Rotorzeitkonstante $T_R = L_r / R_r$ berechnet, wobei $Rr$ der ohmsche Widerstand des Rotors und $Lr$ die Rotorinduktivität $L_r = L_m + L_{lr}$ ist, wobei $L_{lr}$ der Leckfluss des Rotors ist, und schließlich

f) die in den Schritten b) und c) berechneten Referenzströme $I^*_{ds\ opt}$ und $|I^*_{qs\ opt}|$ werden als Eingangssignale in einen Raumvektormodulator eingegeben, um die Torimpulse an den Gleichrichter des Windgenerators zu liefern.

2. Verfahren nach Anspruch 1, **dadurch gekennzeichnet, dass** die Referenzfeldkomponente des Statorstroms $I^*_{ds\ opt}$ den optimalen magnetischen Fluss bestimmt, sodass eine Verlustminimierung des Käfigläufer-Asynchrongenerators erreicht wird.

3. Verfahren nach einem der Ansprüche 1 oder 2, **dadurch gekennzeichnet, dass** die Referenz-Drehmomentkomponente des Statorstroms $|I_{qs\ opt}|$ die optimale Drehzahl des Asynchrongenerators mit Käfigläufer bestimmt, sodass eine maximale Leistungsausbeute der Windturbine erreicht wird.

4. Verfahren nach einem der Ansprüche 1 bis 3, **dadurch gekennzeichnet, dass** die Parameter $G_{q1}$ und $G_{q2}$ experimentell durch Kurvenanpassung der Gleichung $G_q = G_{q1} + G_{q2}\omega_r$ bestimmt werden, wobei der Parameter $G_q$ durch die Gleichung

$$G_q = L_r \frac{\rho \pi R^5 C_{P_{opt}} - 2c_m \lambda^3_{opt}}{3 p L^2_m n \lambda^3_{opt}}$$

bestimmt wird und von den Polpaaren $p$ und den Magnetisierungs- und Rotorinduktivitäten $L_m$ bzw. $L_r$ des Asynchrongenerators mit Käfigläufer abhängt, von der Luftdichte p, dem Übersetzungsverhältnis n, dem mechanischen Verlustbeiwert $c_m$ des Windsystems, dem Radius der Blätter $R$, dem optimalen Wert des Spitzengeschwindigkeitsverhältnisses $\lambda_{opt}$ und dem optimalen Wert des aerodynamischen Koeffizienten $C_{p\ opt}$ der Windturbine.

5. System mit einem Steuerschema des Gleichrichterumrichters eines Windgenerators mit Käfigläufer-Asynchrongenerator, **dadurch gekennzeichnet, dass** es das Steuerverfahren zur Optimierung des Wirkungsgrads nach Anspruch 1 ausführt, dass es zwei Regler (5, 6) umfasst, die gleichzeitig arbeiten, indem sie die Generatordrehzahl $\omega_r$ gleichzeitig eingeben und die optimalen Werte des Referenzfeldes und des Drehmoment-Statorstroms des elektrischen Generators bestimmen, um die optimalen Komponenten $I^*_{ds\ opt}$ und $|I^*_{qs\ opt}|$ des Statorstroms nach Anspruch 1 in b) bzw. c) zu bestimmen.

6. System nach Anspruch 5, **dadurch gekennzeichnet, dass** der Gleichrichterumrichter des Windgenerators mit Käfigläufer-Asynchrongenerator durch einen vollständig gesteuerten IGBT-Umrichter implementiert ist, der eine feldorientierte Steuerung durch Raumvektormodulation verwendet.

7. System nach einem der Ansprüche 5 oder 6, **dadurch gekennzeichnet, dass** die Referenzfeldkomponente des Statorstroms $I^{*}_{ds}$ durch einen Regler geregelt wird, der die Bedingung der Gleichung

$$I^{*}_{ds_{opt}} = \omega_r \sqrt{G_d(G_{q1} + G_{q2}\omega_r)}\left[\frac{1+T_a\omega_e^2}{1+T_b\omega_e^2}\right]^{1/4}$$

umsetzt, und die Eingabe in den Regler die Drehzahl $\omega_r$ des Käfigläufer-Asynchrongenerators ist.

8. System nach einem der Ansprüche 5 bis 7, **dadurch gekennzeichnet, dass** die Referenz-Drehmomentkomponente des Statorstroms $I^{*}_{qs}$ durch einen Regler geregelt wird, der die Bedingung der Gleichung

$$\left|I^{*}_{qs_{opt}}\right| = \omega_r \sqrt{\frac{G_{q1}}{G_d}}\left[\frac{1+T_b\omega_e^2}{1+T_a\omega_e^2}\right]^{1/4}$$

umsetzt, und die Eingabe in den Regler die Drehzahl $\omega_r$ des Käfigläufer-Asynchrongenerators ist.

## Revendications

1. Procédé d'optimisation de l'efficacité d'une éolienne par le contrôle du générateur à induction à cage d'écureuil pouvant réaliser simultanément une récupération de puissance maximale de l'éolienne et une efficacité maximale de la génératrice électrique au moyen d'une minimisation de sa perte électrique, **caractérisé en ce qu'**il comprend les étapes suivantes :

   **a)** la vitesse du générateur $\omega_r$ est mesurée par un capteur sur l'arbre du rotor du générateur et c'est le seul signal d'entrée,
   **b)** le courant de champ de référence $I^{*}_{ds}$ du générateur électrique est calculé de sorte que l'efficacité du générateur électrique soit maximisée par l'équation mathématique

$$I^{*}_{ds_{opt}} = \omega_r \sqrt{G_d G_q}\left[\frac{1+T_a\omega_e^2}{1+T_b\omega_e^2}\right]^{1/4}$$

   qui sert de condition optimale pour la commande de courant $I_{ds}$ et utilise les paramètres $G_d$, $G_{q1}$, $T_a$ et $T_b$, ainsi que la vitesse angulaire synchrone $\omega_e$, qui est déterminée par la commande vectorielle en boucle fermée du générateur électrique selon d) et e) ci-dessous,
   **c)** le courant de couple de référence $I^{*}_{qs}$ du générateur électrique est calculé de sorte que l'efficacité de l'éolienne soit maximisée par l'équation mathématique

$$\left|I^{*}_{qs_{opt}}\right| = \omega_r \sqrt{\frac{G_q}{G_d}}\left[\frac{1+T_b\omega_e^2}{1+T_a\omega_e^2}\right]^{1/4}$$

   qui sert de condition optimale pour le contrôleur de courant $I_{ds}$ et utilise les paramètres $G_d$, $G_{q1}$, $T_a$ et $T_b$, ainsi que la vitesse angulaire synchrone $\omega_e$ qui est déterminée par la commande vectorielle en boucle fermée du générateur électrique selon d) et e) ci-dessous,

   **d)** les paramètres ci-dessus $G_d$ tel que défini dans l'équation $G_d = \sqrt{1 + \dfrac{R_r L_m^2}{R_s L_r^2}}$ , $G_{q1}$, $G_{q2}$ tels que déter-

   minés par l'équation $G_q = G_{q1} + G_{q2}\omega_r$ et par l'équation

$$G_q = L_r \frac{\rho \pi R^5 C_{p_{opt}} - 2c_m \lambda_{opt}^3}{3 p L_m^2 n \lambda_{opt}^3}$$

et $T_a$ et $T_b$ tels que définis dans les équations $T_a = L_m^2 \dfrac{c_{Fe}(L_r - L_m)^2 + c_{str}}{3(R_s L_r^2 + R_r L_m^2)}$ et $T_b = L_m^2 \dfrac{c_{Fe}}{3R_s}$ dépendent de la résistance du rotor $R_r$, de la résistance du stator $R_s$, de l'inductance de magnétisation $L_m$, de l'inductance du rotor $L_r$ où $L_r = L_m + L_{lr}$ et $L_{lr}$ est la fuite de flux du rotor, du coefficient de perte en fer $c_{Fe}$ et du coefficient de perte parasite $c_{str}$, de la densité de l'air $\rho$, du rayon des pales $R$, du rapport d'engrenage $n$, du coefficient de perte mécanique $c_m$, des paires de pôles du générateur d'induction triphasé $p$, du coefficient d'éolienne optimal $C_{p\,opt}$, et $\pi$ étant égal à 3,14, les paramètres $G_{q1}$ et $G_{q2}$ étant déterminés par voie expérimentale par courbe d'ajustement, et dans lequel $\lambda_{opt}$ est donné par $\omega_{r_{opt}} = \dfrac{\lambda_{opt} u}{R}$ où $\omega_r$ est la vitesse de rotation de l'éolienne (en rad/s) donnant la vitesse optimale du rotor qui fournit la puissance de sortie maximale de l'éolienne (mode MPPT) pour chaque vitesse du vent $u$, où u est la vitesse du vent (m/s) et $\lambda$ le rapport de vitesse de pointe, qui est défini comme le rapport de la vitesse linéaire de la pointe de la pale à la vitesse du vent comme suit: $\lambda = \dfrac{\omega_r R}{u}$

e) la vitesse angulaire synchrone $\omega_e$ est nécessaire comme signal de rétroaction pour les étapes précédentes b) et c) et est calculée par la commande vectorielle en boucle fermée du générateur électrique en considérant l'inductance magnétisante $L_m$ et la constante de temps du rotor $T_R = L_r / R_r$, où $R_r$ est la résistance ohmique du rotor et $L_r$ l'inductance du rotor $L_r = L_m + L_{lr}$ où $L_{lr}$ est la fuite de flux du rotor, et enfin,

f) les courants de référence $I^*_{ds\,opt}$ et $|I^*_{qs\,opt}|$, calculés aux étapes b) et c)), sont founis comme signaux d'entrée à un modulateur vectoriel spatial pour fournir les impulsions de grille au redresseur de l'éolienne.

2. Procédé selon la revendication 1, **caractérisé en ce que** la composante du champ de référence du courant statorique $I^*_{ds\,opt}$ détermine le flux magnétique optimal de manière à ce qu'une minimisation de perte du générateur à induction à cage d'écureuil soit accomplie.

3. Procédé selon l'une des revendications 1 ou 2, **caractérisé en ce que** la composante du couple de référence du courant statorique $|I^*_{qs\,opt}|$ détermine la vitesse de rotation optimale du générateur à induction à cage d'écureuil de manière à ce qu'une récupération de puissance maximale de l'éolienne soit accomplie.

4. Procédé selon l'une des revendications 1 à 3, **caractérisé en ce que** les paramètres $G_{q1}$ et $G_{q2}$ sont déterminés expérimentalement par ajustement de courbe de l'équation

$$G_q = G_{q1} + G_{q2}\omega_r$$

dans laquelle le paramètre $G_q$ est déterminé par l'équation $G_q = L_r \dfrac{\rho \pi R^5 C_{p_{opt}} - 2c_m \lambda_{opt}^3}{3 p L_m^2 n \lambda_{opt}^3}$ et dépend des paires de pôles $p$ et des inductances de magnétisation et du rotor $L_m$ et $L_r$, respectivement du générateur à induction à cage d'écureuil, de la densité de l'air $\rho$, du rapport d'engrenage $n$, du coefficient de perte mécanique $c_m$ du système de vent, du rayon des pales $R$, de la valeur optimale du rapport de vitesse de pointe $\lambda_{opt}$ et de la valeur optimale du coefficient aérodynamique $C_{p\,opt}$ de l'éolienne.

5. Système avec schéma de commande du convertisseur redresseur d'une éolienne avec générateur à induction à cage d'écureuil, **caractérisé en ce qu'**il met en oeuvre le procédé de commande d'optimisation de l'efficacité selon la revendication 1 et **en ce qu'**il comprend deux commandes (5, 6) qui fonctionnent simultanément en entrant simultanément la vitesse du générateur $\omega_r$ et déterminent les valeurs optimales du champ de référence et des courants statoriques de couple du générateur électrique, pour déterminer les composantes optimales $I^*_{ds\,opt}$ et

$|I^*_{qs\,opt}|$ du courant statorique comme défini dans la revendication 1 en b) et c), respectivement.

6.  Système selon la revendication 5, **caractérisé en ce que** le convertisseur redresseur de l'éolienne avec générateur à induction à cage d'écureuil est mis en oeuvre par un convertisseur IGBT entièrement commandé qui utilise une commande orientée par champ par modulation spatio-vectorielle.

7.  Système selon l'une des revendications 5 ou 6, **caractérisé en ce que** la composante de champ de référence du courant statorique $I^*_{ds}$ est régulée par une commande qui met en œuvre la condition de l'équation

$$I^*_{ds_{opt}} = \omega_r \sqrt{G_d(G_{q1} + G_{q2}\omega_r)} \left[ \frac{1 + T_a\omega_e^2}{1 + T_b\omega_e^2} \right]^{1/4}$$

et l'entrée à la commande est la vitesse de rotation $\omega_r$ du générateur à induction à cage d'écureuil.

8.  Système selon l'une des revendications 5 à 7, **caractérisé en ce que** la composante de couple de référence du courant statorique est régulée par une commande qui met en œuvre la condition de l'équation $\left| I^*_{qs_{opt}} \right| = \omega_r \sqrt{\dfrac{G_{q1}}{G_d}} \left[ \dfrac{1 + T_b\omega_e^2}{1 + T_a\omega_e^2} \right]^{1/4}$ et l'entrée à la commande est la vitesse de rotation $\omega_r$ du générateur à induction à cage d'écureuil.

**Figure 1**

**Figure 2**

$$I_{ds}^* = \omega_r \sqrt{G_d(G_{q1}+G_{q2}\omega_r)}\left[\frac{1+T_a\omega_e^2}{1+T_b\omega_e^2}\right]^{1/4}$$

$$I_{qs}^* = -\omega_r \sqrt{\frac{G_{q1}}{G_d}}\left[\frac{1+T_b\omega_e^2}{1+T_a\omega_e^2}\right]^{1/4}$$

$$\omega_{sl} = \frac{L_m}{\psi_r T_R} I_{qs}^*$$

$$\psi_r = \frac{L_m}{T_R s + 1} I_{ds}^*$$

Space Vector Modulation

Gate pulses to the IGBTs rectifier bridge

**Figure 3**

Wind-Turbine

Gear Box

3-phase Squirrel-cage Induction Generator

Power and Control System

Rectifier Control Scheme

Opt. efficiency controllers

$I_{ds}^* = f(\omega)$    $I_{qs}^* = f(\omega)$

Space-vector modulation

Inverter Control Scheme

PI controllers for $V_{dc}$ and $Q_N$

$I_{dN}^*$    $I_{qN}^*$

Space-vector modulation

Gate pulses

Rectifier

Breaking Resistor

Gate pulses

Inverter

L-C-L filter

(3-phase Network)

**Figure 4**

17

**Figure 5**

Figure 6a

Figure 6b

## REFERENCES CITED IN THE DESCRIPTION

### Patent documents cited in the description

- US 4525633 A
- US 4695736 A
- US 5155375 A
- US 7304400 B2
- US 7095131 B2
- US 5075612 A
- US 7312592 B
- US 6711556 B
- US 7854283 B3
- US 8098054 B2
- US 7798631 B

### Non-patent literature cited in the description

- **R.M. HILLOOWALA ; A.M. SHARAF.** A rule-based fuzzy logic controller for a PWM inverter in a stand-alone wind energy conversion scheme. *IEEE Trans. Ind. Appl.,* January 1996, vol. 32 (1), 57-65
- **R. DATTA ; V. T. RANGANATHAN.** A method of tracking the peak power points for a variable speed wind energy conversion system. *IEEE Trans. Energy Convers,* March 2003, vol. 18 (1), 163-168
- **M. PUCCI ; M. CIRRINCIONE.** Neural MPPT control of generators with induction machines with-out speed sensors. *IEEE Trans. Ind. Electron.,* January 2011, vol. 58 (1), 37-47
- **MUNTEANU, S. BACHA ; A. I. BRATCU ; J. GUIRAUD ; D. ROYE.** Energy-reliability optimization of wind energy conversion systems by sliding mode control. *IEEE Trans. Energy Convers,* September 2008, vol. 23 (3), 975-984
- **V. GALDI ; A. PICCOLO ; P. SIANO.** Designing an adaptive fuzzy controller for maximum wind energy extraction. *IEEE Trans. Energy Convers,* June 2008, vol. 23 (2), 559-569
- **A. G. ABO-KHALIL ; H. G. KIM ; D. C. LEE ; J. K. SEOK.** Maximum output power control of wind generation system considering loss minimization machines. *Proc. IEEE Int. Conf. IECON,* 2004, 1676-1681
- **A. G. ABO-KHALIL.** Model-based optimal efficiency control of induction generator for wind power systems. *Proc. Conf. Rec. ICIT,* 2011, 191-197
- **A. MESEMANOLIS ; C. MADEMLIS ; I. KIOSKE-RIDIS.** A fuzzy-logic based control strategy for maximum efficiency of a wind energy conversion system. *Proc. IEEE Intern, Symposium on Power Electronics SPEEDAM,* 2012, 7-12
- **A. MESEMANOLIS ; C. MADEMLIS ; I, KIOSKE-RIDIS.** Maximum electrical energy production of a variable speed wind energy conversion system. *Proc. IEEE Int. Symposium ISIE,* 2012, 1029-1034
- **M. CHINCHILLA ; S. ARNALTES ; J. C. BURGOS.** Control of permanent-magnet generators applied to variable-speed wind-energy systems connected to the grid. *IEEE Trans. Energy Convers,* March 2006, vol. 21 (1), 130-135
- **W. QIAO ; L. QU ; R. G. HARLEY.** Control of IPM synchronous generator for maximum wind power generation considering magnetic saturation. *IEEE Trans. Ind. Appl.,* May 2009, vol. 45 (3), 1095-1105
- **A. MESEMANOLIS ; C. MADEMLIS ; I. KIOSKE-RIDIS.** Maximum efficiency of a wind energy conversion system with a PM synchronous generator. *Proc. MedPower 2010 Int. Conf.,* 2010, 1-9
- **A. MESEMANOLIS ; C. MADEMLIS.** A Neural Network Based MPPT Controller for Variable Speed Wind Energy Conversion Systems. *Speedam Conf.,* June 2012